(19) Europäisches Patentamt
European Patent Office
Office européen des brevets

(11) Veröffentlichungsnummer: **0 447 800 A1**

# (12) EUROPÄISCHE PATENTANMELDUNG

(21) Anmeldenummer: **91102094.9**

(22) Anmeldetag: **14.02.91**

(51) Int. Cl.[5]: **C04B 11/02**, C04B 11/26, C04B 11/05, C01F 11/46

(30) Priorität: **19.02.90 DD 337952**

(43) Veröffentlichungstag der Anmeldung: **25.09.91 Patentblatt 91/39**

(84) Benannte Vertragsstaaten: **AT BE CH DE ES FR GB IT LI LU NL SE**

(71) Anmelder: **RUDERSDORFER ZEMENT GmbH**
**PSF 13 und 14**
**O-1253 Rüdersdorf(DE)**

(72) Erfinder: **Clemens, Paul**
**Schöneicher Strasse 71**
**O-1254 Schöneiche(DE)**
Erfinder: **Wanzura, Ellen**
**Brückenstrasse 93**
**O-1253 Rüdersdorf(DE)**
Erfinder: **Fietsch, Günter**
**Hallmeyer Strasse 24**
**O-4500 Dessau(DE)**
Erfinder: **Meyer, Helmut**
**Lindenstrasse 10**
**O-1254 Schöneiche(DE)**
Erfinder: **Kunze, Detlef**
**Strasse der Freundschaft 5**
**O-4413 Sandersdorf(DE)**
Erfinder: **Hartmann, Hans-Jürgen**
**Arthur-Kessler-Strasse 6**
**O-4500 Dessau(DE)**
Erfinder: **Schnelle, Wolfgang**
**Herrmann-Heller-Strasse 11**
**O-4500 Dessau(DE)**

(74) Vertreter: **Patentanwälte Beetz sen. - Beetz jun. Timpe - Siegfried - Schmitt-Fumian-Mayr**
**Steinsdorfstrasse 10**
**W-8000 München 22(DE)**

## (54) Verfahren zum Behandeln von Anfallgipsen.

(57) Die Erfindung betrifft ein Verfahren zum Behandeln von Anfallgipsen insbesondere REA- Gips zu hochaktiven modifizierbaren Gipsbindemitteln h oher Festigkeit.

Erfindungsgemäß wird ein Verfahren zur Anwendung gebracht, welches bei gleichzeitiger Trocknung, Desagglomeration und Dehydratation im Unterdruckbereich, eine Herstellung von hochaktiven modifizierungsfähigen Gipsbindemitteln hoher Festigkeit gestattet.

Dabei wird erfindungsgemäß Anfallgips (REA- Gips) mit einem Kornbereich bis 200 μm, dem gegebenenfalls 10 % Masseanteile gemahlener Naturgips zugemischt werden kann, bei einer Guttemperatur von 335 bis 363 K in einem Druckbereich von 2,5 bis 8 Kpa dehydratisiert, wobei die Dehydratisierung bei Masseanteilen von 50 % - 100 % Anhydrit III beendet wird.

EP 0 447 800 A1

Die Erfindung betrifft ein Verfahren zum Behandeln von Anfallgips insbesondere REA- Gips zu hochaktiven, modifizierungsfähigen Gipsbindemitteln großer Festigkeit.
Es ist bekannt, daß Brennanlagen der Gipsindustrie zum Behandeln von Naturgips vorrangig zum Dehydratisieren dieser Gipsart verwendet werden.

In der Literatur ist mehrfach darauf hingewiesen worden, daß u. a. REA- Gips vor der Dehydratation in ein dem Naturgips ähnliches Produkt umgewandelt werden muß, das heißt, ein aufwendiges Trocknen und Kompaktieren in einer Walzenpresse ist erforderlich. Außerdem sehen die bekannten Verfahren in der Regel Einrichtungen zur Kühlung des dehydratisierten Produktes zwingend vor.
Da der mit den bekannten Verfahren entwässerte Anfallgips gegenüber herkömmlichen Gipsbindern nachteilig abweichende Verarbeitungseigenschaften, wie Thixotropie oder Sedimentation aufweist, wird durch eine kostenaufwendige Nachbehandlung z. B. Alterung, Mahlung oder dem Zusatz von Additiven ein Ausgleich angestrebt.

Zur Beherrschung der Staubbelastung und der Qualitätsprobleme bei der Entwässerung feinkörnigen Gipses ist gemäß dem DD-WP 263 048 ein indirekt beheizter Röhrentrockner bei 403 K - 453 K vorgesehen. Dabei wird jedoch das Produkt, unabhängig vom Dehydratationsgrad des Einzelkornes, Verweilzeiten von etwa 50 min ausgesetzt.

Bekannt ist weiterhin aus der DE-PS 3 721 421, ein Wirbelschichttrockner, in dem die Wirbelschicht aus Sand oder aus einem anderen körnigen gegenüber dem Pulvergips inerten Material mit guter Wärmeübergabgszahl besteht. Hierbei sollen die in die Wirbelschicht gleichmäßig verteilt eingebrachten Gipsartikel die Wärme aus der Sandwirbelschicht und dem Wirbelgas aufnehmen.

Die Sandwirbelschicht als Mittler für den Wärmeübergang ist technisch aufwendig gegenüber den Verfahren, in denen die Wirbelschicht gleichzeitig Wirbelgut ist.

Ein weiteres aus der De-AS 2 622 994 bekanntes Wirbelschichtverfahren realisiert die Wirbelschicht über einen Wirbelboden mit auf ca. 378 K vorgewärmter Luft und einem Wärmetauscher, die im Kontakt mit der Wirbelschicht die Dehydratation des Anfallgipses ermöglicht. Nachteilig ist, daß der Anfallgips vor der Aufgabe zu Pulver getrocknet werden muß. Das auf Temperaturen von 445 - 465 K erhitzte Gut muß anschließend technisch aufwendig wieder über Wärmetauscher in der Wirbelschicht gekühlt werden.

Es sind vielfältige technische Lösungen von Wirbelschichtapparaten und Verfahren oder Vorrichtungen zum Trocknen von Pasten und feinkörnigen Produkten, z. B. aus der US-PS 4 581 830 bekannt. Hinweise auf komplexe Verfahrensschritte, d. h. auf Trocknen, Desagglomerieren und Dehydratisieren bzw. Kalzinieren, fehlen im allgemeinen. Auch moderne industriell gebotene Ausrüstungen bzw. Anlagen realisieren die Verfahrensschritte Trocknen, Desagglomerieren und Dehydratisieren oder Kalzinieren mit verschiedenen Apparaten unterschiedlicher Geometrie.

Hervortretendes Merkmal all dieser bekannten Verfahren ist, daß zur Erreichung des erforderlichen Dehydratationsgrades Guttemperaturen realisiert werden müssen, die im Bereich von 393 - 473 K liegen. Abgesehen von der Staubabscheidung werden immer mehrere Einrichtungen eingesetzt. Eine Vielzahl von Apparaten und hohe Temperaturen ziehen energetische Nachteile nach sich.

Weiterhin offenbart die DE-PS 2 727 544 Wirbelschichtverfahren zum Trocknen und Brennen von Gipsdihydrat zu Gipshalbhydrat, welches die gestellte Aufgabe in einem Apparat vollzieht, jedoch Umwandlungstemperaturen von 393 - 433 K benötigt.

Die Verbesserung gegenüber den bereits dargestellten bekannten Verfahren liegt in der Verwertung gereinigter Abgase aus Heizwärmeoder Wärmekraftwerken.
Bei hohen Guttemperaturen und langen Verweilzeiten kommt es nachteilig zu einem Zerfall der Kristallite, wobei die aufgelockerten Kristallite einen hohen Wasseranspruch und damit eine niedrige Festigkeit zur Folge haben. Zur Qualitätsverbesserung muß dann der Dehydratation ein aufwendiger Prozeß einer künstlichen Alterung nachgeschaltet werden oder es wird ein Zusatz von Stoffen erforderlich, welche die Abbindezeiten, Festigkeiten und die Kristallisation beeinflussen.

Der Erfindung liegt die Aufgabe zugrunde, ein Verfahren zum Behandeln von Anfallgips insbesondere REA- Gips zu hochaktiven modifizierungsfähigen Gipsbindemitteln großer Festigkeit zu schaffen, mit dem der Ablauf verschiedenartiger Verfahrensschritte komplex und überlagert gestaltet ist und eine schnelle Entwässerung mit einem energetisch vorteilhaften thermischen Regim so durchgeführt wird, daß die Kristallstrukturen des REA- Gipses erhalten bleiben.

Erfindungsgemäß wird die Aufgabe dadurch gelöst, daß:

- der Anfallgips mit einem Kornbereich von < 200 $\mu$m
- beginnend im Unterdruckbereich von 2,5 - 8 Kpa bei einer Guttemperatur von ≦ 363 K einer Dehydratation unterzogen wird,
- die bei einem Masseant eil von 50 % - 100 % Anhydrit III bez ogen auf das Dehydratationsprodukt

beendet wird.
Es ist im Sinne der Erfindung, daß Bedingungen für die gleichzeitige Trocknung, Desagglomeration und Dehydratation geschaffen werden, die zur Sicherung eines Partialdruckunterschiedes den entstehenden Wasserdampf ständig unmittelbar nach dem Entstehen von den Gipsartikeln wegführen. Die Dehydratation erfolgt vorteilhaft bei niedrigen Temperaturen, um ein Zerplatzen der Kristallite beim Austritt des Kristallwassers zu vermeiden und deren ursprüngliche Größe und Form weitestgehend zu erhalten.

Bei Beibehaltung der Kristallitgröße und - form ergeben sich günstige Bedingungen, die Dehydratationsprodukte Halbhydrat sowie Anhydrit III, bedingt durch den Dichteunterschied vom Dihydrat bei einem pneumatischen Austrag aus dem Reaktionsgefäß zu trennen. Thermische Beanspruchung und Verweilzeit des Einzelkornes werden bei einer Konzentration dieser technologischen Schritte minimiert. Da das Eintreten von Entwässerungsvorgängen bei kristallwasserhaltigen Salzen von Temperatur und Druck abhängig ist, kann das Eintreten der Dehydratation von kristallwasserhaltigen Salzen durch Druckverminderung erreicht werden.

Vorteilhaft werden die stofflichen Anforderungen erfüllt, wenn der REA- Gips in eine gerührte Wirbelschicht eingetragen und durch einen tangential in den zylindrischen Reaktionsraum eingebrachten Heißgasstrom behandelt wird. Es ist gleichfalls erfinderisch, wenn das Verfahren eine pneumatisch erregte Wirbelschicht zur Anwendung vorsieht. Die Steuerung des Unterdruckes und der Gasgeschwindigkeit im Reaktionsgefäß sowie der anschließende kontinuierliche pneumatische Austrag des Dehydratationsproduktes sind dabei von entscheidender Bedeutung.

Es ist im weiteren Sinne der Erfindung, daß der Unterdruck 4,5 Kpa und der Masseanteil Anhydrit III 70 % - 90 % beträgt, bei denen die Reaktion verläuft bzw. beendet wird. Erfindungsgemäß ausgebildet ist die Lösung der Aufgabe, wenn bis 30 % des Abgasstromes zum Heißgasstrom zurückgeführt werden. Das verfahrensgemäße Regim verläuft jedoch gleichermaßen wirkungsvoll und ausgefüllt, wenn der zugeführte Heißgasstrom von Abgasstromanteilen freigehalten wird.
Es ist erfindungsgemäß ein Vorzug, daß der gemahlene Naturgips ein breites Kornband mit einem maximalen Siebrückstand von 5% bei 200 $\mu$m aufweist, wobei die Erfindung ausgestaltend dem Anhydrit III - reichen Bindemittel bis 15 % Masseanteile REA- Gips und bis zu 60 % Masseanteil Flugasche sowie im Anteil bis zu 10 % Naturgips zugesetzt werden.

Die Aufgabe kann wahlweise einzeln für sich erfolgen oder in unterschiedlichen Masseanteilen gemeinsam.
In einer weiteren Form der Erfindung ist es vorteilhaft, wenn nur Modifizierungsstoffe mit puzzolanischen Eigenschaften, wie Flugaschen, Schlacken u.ä. verwendte werden.

In sinnvoller Ausbildung der Erfindung besteht das aus dem Abgasestrom abgeschiedene Produkt bei Guttemperaturen von 333 - 353 K nahezu vollständig aus einem hochreaktionsfähigen Anhydrit III (Hydratationswärme > 180 J/g). Die REM-Aufnahmen von REA-Gips vor und nach der Dehydratation stimmen in Korngröße und -form weitgehend überein. Bei Einstreumengen von ≧ 145 g werden Druckfestigkeiten nach zwei Stunden von 8 N/mm$^2$ erreicht. Bedingt durch die große Reaktionsfähigkeit mit Wasser sind die Erhärtungszeiten kurz. Die Steuerung des Dehydratationsprozesses ist einfach. Sie erfolgt über die Abgastemperatur und den Druck über der Wirbelschicht, die als gerührte oder pneumatisch erregte Wirbelschicht ausgebildet sein kann. Die niedrige Guttemperatur erfordert keine Kühlung. Das Dehydratationsprodukt kann sofort weiterverarbeitet werden.

Das hergestellte hochaktive Anhydrit III - reiche Material ist sehr hygroskopisch und besitzt vorteilhaft die Fähigkeit, bei Berührung mit feuchten Hydraten diesen sowohl Feuchtigkeit als auch Kristallwasser zu entziehen.
In einer weiteren vorteilhaften Ausgestaltungsform der Lösung nach der Erfindung kann sich bei Zusatz vob REA-Gips eine Umsetzung entsprechend

$$CaSO_4 + 2\ H_2O + 3\ CaSO_4\ III \ \text{-----}> 4\ CaSO_4 + \frac{1}{2}\ H_2O$$

$$H_2O + 2\ CaSO_4\ III \ \text{------}> 2\ CaSO_4 + \frac{1}{2}\ H_2O$$

vollziehen.
Dem Anhydrit III-reichen Bindemittel können je nach Feuchtigkeit bis zu 15% Masseanteile Anfallgips zugesetzt werden.

Bei einem Einsatz von Filteraschen zu dem abgeschiedenen Dehydratationsprodukt werden diese

aktiviert und positive Baustoffeigenschaften der Mischung erzielt, so z. B. hohe Festigkeiten bei niedrigen Rohdichten. Zur Verbesserung des wärmetechnischen Wirkungsgrades kann ein Teil des Abgasstromes als Rückgas dem Heißgasstrom zugeführt werden.
Die Heißgaskonditionierung kann ebenfalls zur Steuerung des Dehydratationsprozesses verwendet werden. Zur Beeinflussung des Kornbandes des Dehydratationsproduktes aus Anfallgipsen ist, wie bereits zuvor, eine Mischung mit gezielt aufgemahlenem Naturgips vor als auch nach der Dehydratation durchführbar.

Durch die Erfindung ist die Herstellung von hochaktiven, modifizierungsfähigen Gipsbindemitteln großer Festigkeit aus REA-Gips bei gleichzeitiger Trocknung, Desagglomeration und Dehydration gegeben. Die Erfindung soll an Hand von Ausführungsbeispielen näher erläutert werden.

Beispiel 1:

In einem Wirbelschichttrockner mit mechanisch gerührter Wirbelschicht und tangential eintretendem Heißgas als Wirbelgas wurde über einen Zwangszuteiler der pastenähnliche REA- Gips eingebracht.

Kennwerte des REA- Gipses:

| | | | |
|---|---|---|---|
| - | Siebrückstände | | |
| | $R_{0,09}$ | $R_{0,063}$ | $R_{0,04}$ |
| | 0,6 % | 6 % | 40 % |
| - mechanisch gebundenes Wasser | 8 - 10 % | | |
| - Kristallwasser | 19,6 % | | |
| - $SO_3$ | 44,3 % | | |

Der Heißgasstrom ist Wärmeträger und dient gleichzeitig der Reaktion sowie dem pneumatischen Austrag des dehydratisierten REA- Gipses. Die Staubabscheidung erfolgte in einem Zyklon oder Gewebeabscheider. Es ist auch möglich die Staubabscheidung mittels Zyklon und Gewebeabscheider gemeinsam vorzunehmen. Die Parameter für die Realisierung des Prozesses wurden wie folgt eingestellt

| | |
|---|---|
| - Gaseingangstemperatur in den Reaktor: | 643 K |
| - Gasausgangstemperautr aus dem Reaktor: | 431 K |
| - Guttemperatur nach dem Reaktor: | 338 K |
| - Unterdruck nach dem Reaktor: | 4,5 Kpa. |

Das Dehydratationsprodukt weist folgende Kennwerte auf

| | | |
|---|---|---|
| - Kristallwasser | ( M+%) | 2,3 |
| - Einstreumenge | (g/100/ml) | 147 |
| - Versteifungsbeginn | (min) | 2 |
| - Versteifungsende | (min) | 4 |
| - Druckfestigkeit nach 2 h | ($N/mm^2$) | 8,6 |
| - Biegezugfestigkeit nach 2 h | ($N/mm^2$) | 3,2 |
| - Rohdichte nach 2 h | ($g/cm^3$) | 1,63 |
| - Hydr. Wärme | (J/g Einwaage) | 183 |

Beispiel 2

Der im Beispiel 1 beschriebene Verfahrensablauf wurde für das Ausgangsprodukt eingehalten. Dem Dehydratationsprodukt wurden bis 15 % Masseanteile REA- Gips zugemischt.

Beispiel 3

Der im Beispiel 1 beschriebene Verfahrensablauf wurde für das Ausgangsprodukt eingehalten. Dem Dehydratationsprodukt wurden bis zu 60 % Masseanteile Flugaschen zugesetzt.

Beispiel 4

In einem Wirbelschichttrockner mit mechanisch gerührter Wirbelschicht und tangential eintretenden Heißgas als Wirbelgas wurde über einen Zwangszuteiler ein Gemisch, bestehend aus pastenähnlichem REA- Gips und gemahlenem Naturgips eingebracht. Der Anteil des gemahlenen Naturgipses beträgt 10 % Masseanteil.

Kennwerte des REA- Gipses

Siebrückstände

| $R_{0,09}$ | $R_{0,063}$ | $R_{0,04}$ |
|---|---|---|
| 0,6 % | 6 % | 40 % |

| | |
|---|---|
| - mechanisch gebundenes Wasser | 8 - 10 % |
| - Kristallwasser | 19,6 % |
| - $SO_3$ | 44,3 % |

Kennwerte des Naturgipses

| | | | |
|---|---|---|---|
| - | Siebrückstände | | |
| | $R_{0,2}$ | $R_{0,09}$ | $R_{0,04}$ |
| | 5 % | 15 % | 22 % |
| - mechanisch gebundenes Wasser | | 0,8 % | |
| - Kristallwasser | | 18,5 % | |
| - $SO_3$ | | 43,2 % | |

Die Trocknung und Dehydratation erfolgte unter den gleichen Bedingungen wie im Beispiel 1 beschrieben worden ist.
Die Parameter für die Realisierung des Prozesses wurden wie folgt eingestellt

| | |
|---|---|
| - Gaseintrittstemperatur in den Reaktor | 653 K |
| - Gasaustrittstemperatur aus dem Reaktor | 439 K |
| - Guttemperatur nach dem Reaktor | 351 K |
| - Unterdruck nach dem Reaktor | 4,5 Kpa |

Das Dehydratationsprodukt weist folgende Kennwerte aus

| | | |
|---|---|---|
| - Kristallwasser | (M - %) | 2,8 |
| - Einstreumenge | (g/100 ml) | 140 |
| - Versteifungsbeginn | (min) | 2 |
| - Versteifungsende | (min) | 4 |
| - Druckfestigkeit nach 2 h | ($N/mm^2$) | 7,1 |
| - Biegezugfestigkeit nach 2 h | ($N/mm^2$) | 3,1 |
| - Rohdichte nach 2 h | ($g/cm^3$) | 1,61 |
| - Hydr. Wärme | (J/g Einwaage) | 186 |

## Patentansprüche

1. Verfahren zum Behandeln von Anfallgips insbesondere REA- Gips, unter Anwendung einer Wirbelschicht zu hochaktiven modifizierungsfähigen Gipsbindemitteln hoher Festigkeit, dadurch gekennzeichnet, daß
   - der Anfallgips mit einem Kornbereich von ≦ 200 µm
   - im Unterdruckbereich von 2,5 - 8 Kpa bei einer Guttemperatur von 333 - 363 K einer Dehydratation unterzogen wird,
   - die bei einem Masseanteil von 50 % - 100 % Anhydrit III bezogen auf das Dehydratationsprodukt beendet wird.

2. Verfahren nach Anspruch 1 dadurch gekennzeichnet, daß der Unterdruck 4,5 Kpa beträgt.

3. Verfahren nach Anspruch 1 dadurch gekennzeichnet, daß die Dehydratisierung bei einer Guttemperatur

von 353 K vorgenommen wird.

4. Verfahren nach Anspruch 1 dadurch gekennzeichnet, daß der Masseanteil Anhydrit III 70 % - 90 % beträgt.

5. Verfahren nach Anspruch 1 dadurch gekennzeichnet, daß dem Anfallgips bis 10 % Naturgips zugemischt wird.

6. Verfahren nach dem Anspruch 1 bis 4 dadurch gekennzeichnet, daß der sich bildende Wasserdampf unmittelbar nach seiner Entstehung abgeführt wird.

7. Verfahren nach einem der vorhergehenden Ansprüche dadurch gekennzeichnet, daß bis 30 % des Abgasstromes zum Heißgasstrom zurückgeführt werden.

8. Verfahren nach einem der vorhergehenden Ansprüche dadurch gekennzeichnet, daß der gemahlene Naturgips ein breites Kornband mit einem maximalen Siebrückstand von 5 % bei 200 $\mu$m aufweist.

9. Verfahren nach einem der vorhergehenden Ansprüche dadurch gekennzeichnet, daß dem Anhydrit III-reichen Bindemittel bis 15 % Masseanteile REA- Gips zugesetzt werden.

10. Verfahren nach einem der vorhergehenden Ansprüche dadurch gekennzeichnet, daß dem Anhydrit III-reichen Bindemittel bis 60 % Masseanteile Flugasche zugesetzt werden.

11. Verfahren nach einem der vorhergehenden Ansprüche dadurch gekennzeichnet, daß dem Anhydrit III-reichen Bindemittel bis 15 % Masseanteile REA- Gips und bis 60 % Masseanteile Flugaschen zugesetzt werden.

12. Verfahren nach einem der vorhergehenden Ansprüche dadurch gekennzeichnet, daß zur Modifizierung des Bindemittels, Stoffe mit puzzolonischen Eigenschaften verwendet werden.

13. Verfahren nach Anspruch 1 bis 12 dadurch gekennzeichnet, daß eine gerührte Wirbelschicht zur Anwendung gebracht wird.

14. Verfahren nach Anspruch 1 bis 12 dadurch gekennzeichnet, daß eine pneumatisch erregte Wirbelschicht eingesetzt wird.

Europäisches Patentamt

# EUROPÄISCHER RECHERCHENBERICHT

Nummer der Anmeldung

EP 91102094.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,A | DE - A1 - 2 622 994 (RHONE-POULENC INDUSTRIES) * Gesamt * ---- | 1-14 | C 04 B 11/02<br>C 04 B 11/26<br>C 04 B 11/05<br>C 01 F 11/46 |
| | | | **RECHERCHIERTE SACHGEBIETE (Int Cl 5)** |
| | | | C 04 B<br>C 01 F |

Der vorliegende Recherchenbericht wurde für alle Patentansprüche erstellt.

| Recherchenort | Abschlußdatum der Recherche | Prüfer |
|---|---|---|
| WIEN | 16-05-1991 | BECK |

KATEGORIE DER GENANNTEN DOKUMENTEN

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62